# EUROPEAN PATENT APPLICATION

(11) **EP 2 187 053 A1**
(43) Date of publication of application: **19.05.2010**
(21) Application number: 07816532.1
(22) Date of filing: 10.10.2007
(51) Int. Cl.: F04B 33/00

(54) **PORTABLE AIR PUMP**

(30) Priority: 23.04.2007 CN 200710098373
(71) Applicant: Huang, Ying-Che, Sioushuei Township Changhua Taiwan 504 (CN)
(72) Inventor: Huang, Ying-Che, Sioushuei Township Changhua Taiwan 504 (CN)
(74) Representative: Gee, Steven William
(86) International application number: PCT/CN2007/002918
(87) International publication number: WO 2008/128400

(57) **Abstract**

A portable air pump includes a tubular body, a barrel, a piston mechanism, a head, and a dispensing head. Tubular body has upper cover having air inlet holes and sealed bottom cover. Barrel has air passage running through along its axis direction. Piston, having center hole and through hole, and check valve is in between second end of the barrel and piston. As tubular body is moved in relation to barrel away from the head, air is flown into tubular body through air inlet holes and to the bottom of tubular body through the through hole. Air can be prevented from flowing out from the center hole using check valve disc. As the tubular body is moved in relation to the barrel towards the head, air on the bottom of tubular body is flown into air passage of the barrel through center hole, and out from the head and the dispensing head.

## Description

### BACKGROUND OF THE INVENTION

### 1. Field of the Invention

The present invention relates to an air pump for inflating air-inflatable objects (such as a tire), and in particular, to an air pump having advantages such as occupying a smaller volume and is portable.

### 2. The Prior Arts

Generally, the conventional air pump mainly includes an inflating pump, a head for connecting with the inflating pump, and a dispensing head, in which one end is connected with the head. After the other end of the dispensing head is connected with an air valve of the inflated object, the inflating pump can be operated so as to produce compressed air, and then the air can be inflated into the inflated object through the head and an air hose.

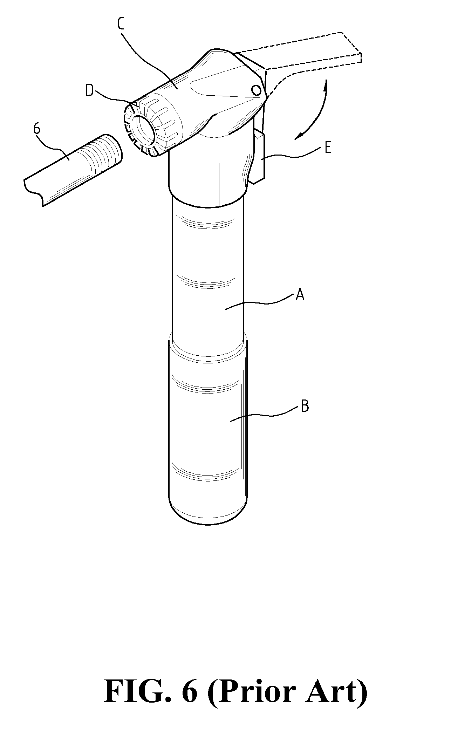

For the sake of allowing for easier carrying portabilty, several air pumps have been designed to occupy a smaller volume, such as a conventional air pump as shown in FIG. 6, which includes a tubular body A, a handle B, a head C, a nosepiece D which is positioned on the head, and a lever E. When to inflate an object, the nosepiece D is configured onto an inflating valve of the inflated object, and then the lever E is rotated to force a clamping member inside the air pump to be compacted for clamping the inflating valve tightly. Then the user can hold the handle B, and move it in the axis direction of the tubular body A, so that the air can be inflated into the inflating valve through the head C and the nosepiece D.

But the above conventional air pump has many disadvantages described as follows. During the inflating process, the air may be discharged due to leakage while operating the lever to engage and disengage the nosepiece D onto the air valve of the tire; and the nosepiece may be loosened from the inflating valve as the air pressure in the tubular body becomes too high. In addition, when the air pump is used, the user is required to hold the tubular body by one hand and to hold the handle by using the other hand, so that the entire length of the air pump can not be reduced, and because the dimensions of the air pump remains to be too big, therefore, it is inconvenient for carrying.

### SUMMARY OF THE INVENTION

A main objective of the present invention is to resolve some of the problems of the conventional portable air pump, such as having disadvantages of excessive volume and inconvenient for carrying. In addition, the conventional portable air pump has the problem of easily discharging air leakage when engaging and disengaging the nosepiece onto the inflating valve when operating the lever. Furthermore, the nosepiece may be easily loosened as the air pressure in the tubular body becomes too high.

Another objective of the present inventioon is form a tubular body of an air pump to be used as a handle; a piston mechanism and a barrel are to be assembled inside the tubular body. Furthermore, the piston mechanism includes a piston, a check valve seat, and a check valve disc. The check valve seat and the check valve disc are used for preventing the gas or air from flowing in the reverse direction. When the air pump is not being used, the entire barrel can be retreated inside the tubular body, so that the overall volume of the air pump can be reduced to as small as possible, and it is more convenient for carrying or for storage.

The dispensing head is connected with the inflating valve of the inflated objects by means of a threaded connection. Therefore, as compared to the conventional air pump, the connecting means of the present invention is not only easier, but also tighter, so that the dispensing head is not easily loosened under higher gas pressure. Furthermore, the inflating valve used in the screw-on type connecting method occupies a smaller volume, and can be more easily operated.

The portable air pump of the present invention includes a tubular body, a barrel, a piston mechanism, a head, and a dispensing head. The first end of the tubular body is formed with a plurality of air inlet holes. In addition, the second end of the tubular body is sealed. The barrel has an air passage that runs through the first end to the second end of the barrel. Furthermore, the piston mechanism includes a piston, and a check valve. The piston is disposed at the second end of the barrel. The check valve is disposed in between the second end of the barrel and the piston, and making the piston and the second end of the barrel to be disposed inside the tubular body. The piston has a center hole and a through hole. The head is disposed at the first end of the barrel. The dispensing head is disposed at the head. As the tubular body is moved along the axis direction of the barrel and in the direction away from the head, air is flown into the tubular body through the air inlet holes of the upper cover, and then to the bottom of the tubular body through the through hole of the piston; and the check valve disc is used for preventing air to flow through the center hole. As the tubular body is moved in the direction towards the head in relation to the barrel, the air at the bottom end of the tubular body is to flow into the air passage of the barrel, and then flown out from the head and the dispensing head.

The check valve includes a check valve seat and a check valve disc. Furthermore, the check valve includes a check valve seat having a stepped tubular body, one end of which is inserted into the air passage of the second end of the barrel and the other end of which is inserted into the piston; and a check valve disc, which is positioned inside the check valve seat, and the check valve disc is able to move in between the center hole of the piston and the central hole of the check valve seat.

In order to avoid collision of the tubular body of the air pump for producing a noise or causing damage as the tubular body is moved in relation to the barrel along the axis direction, buffer rings can be used in the present invention, which can be disposed on the barrel at the inside or outside of the tubular body. More specifically, the buffer rings are adjacent to the head and the piston, respectively, so that as the tubular body moves in the forward (inflating) stoke to a limit position, the piston can be avoided from colliding with the upper cover on the tubular body directly; and as the tubular body moves in the back stoke, the head can be avoided from colliding with the upper cover.

### BRIEF DESCRIPTION OF THE DRAWINGS

The present invention will be apparent to those skilled in the art by reading the following detailed description of a preferred embodiment thereof, with reference to the attached drawings, in which:

FIG. 1 is a perspective view showing a portable air pump according to an embodiment of the present invention;

FIG. 2 is a perspective view showing a tubular body in a stretched form in relation to the barrel according to the embodiment of the present invention;

FIG. 3 is a perspective exploded view showing the assembling relationship of a plurality of major elements according to a preferred embodiment of the present invention;

FIG. 4A is a cross-sectional view showing the inflating stroke as the air is being inflated out of the tubular body by operating the tubular body according to the preferred embodiment the present invention;

FIG. 4B is a cross-sectional view showing the back stroke as the air is being sucked into the tubular body by operating the tubular body according to the preferred embodiment the present invention;

FIG. 5 is a perspective view showing the connecting of the portable air pump with an inflating valve, according to the embodiment of the present invention; and

FIG. 6 is a perspective view showing a conventional portable air pump.

### DETAILED DESCRIPTION OF THE PREFERRED EMBODIMENT

Reference will now be made in detail to embodiments of the present invention, examples of which are illustrated in the accompanying drawings. The present invention will be apparent to those skilled in the art by reading the following detailed description of a preferred embodiment and the skilled can operate it according to the reference.

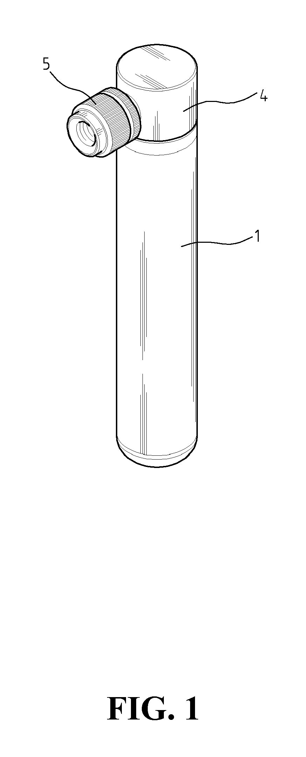

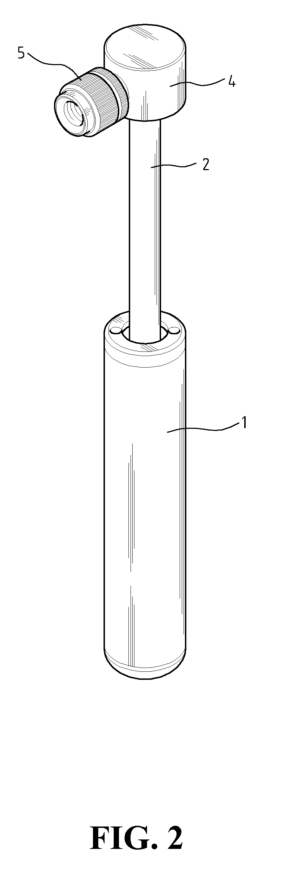

FIG. 1 and FIG. 2 are a plurality of perspective views showing a portable air pump according to an embodiment of the present invention, which includes a tubular body 1, a barrel 2 penetrating through the tubular body 1, a head 4 disposed on the barrel 2, and a dispensing head 5 disposed to the head 4. The barrel 2 and the tubular body 1 can move relative to one another along the axis direction, so that the air can be pushed out through the head 4 and the dispensing head 5.

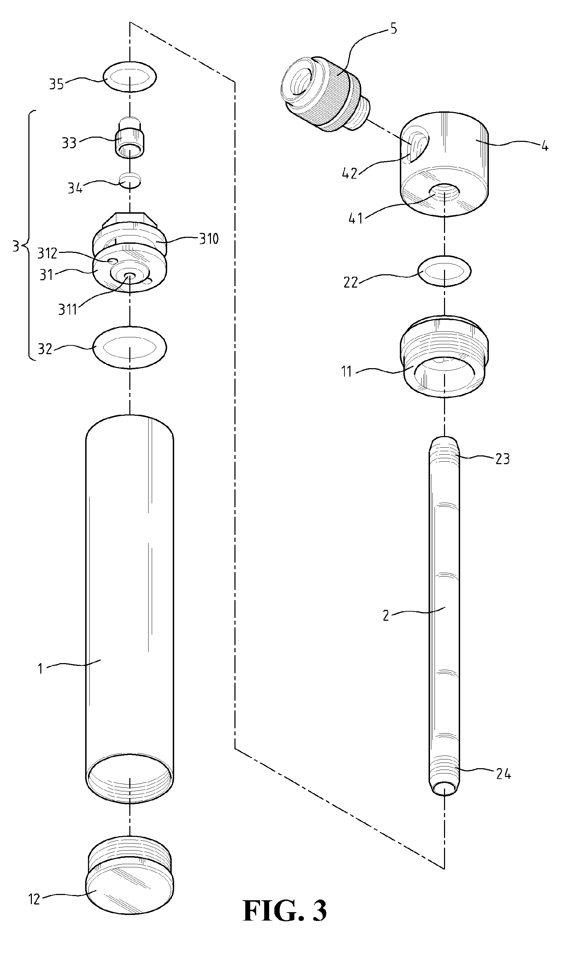

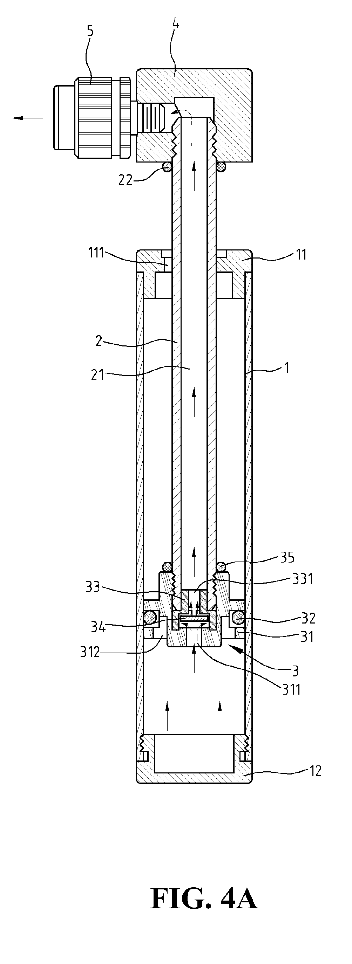

FIG. 3 and FIGs. 4A-4B are a plurality of schematic diagrams illustrating a preferred embodiment according to the present invention, which show the method of assembly and structures of a plurality of major elements of the preferred embodiment of the present invention. The major elements include a tubular body 1, a barrel 2, a piston mechanism 3, a head 4, and a dispensing head 5. In the preferred embodiment of the present invention, the tubular body 1 is of a hollow tubular body, whose two ends are respectively formed with a plurality of internal threads. Also, the upper end of the tubular body 1 is screwed on with an upper cover 11 having threads, and a plurality of air inlet holes 111 are disposed on the upper cover 11; and the lower end of the tubular body 1 is screwed on with a bottom cover 12 having threads for sealing the bottom end of the tubular body 1.

The barrel 2 has a hollow tubular body, whose external diameter is smaller than the internal diameter of the tubular body 1, and the first and second ends of the barrel 2 are formed with a first outer screw thread 23 and a second outer screw thread 24, respectively. Also, the hollow space inside the barrel 2 is of an air passage 21 that runs through the first end and the second end of the barrel 2.

Furthermore, the piston mechanism 3 includes a piston 31 and a check valve. The outer diameter of the piston 31 is formed with an annulus groove 310; and the center of the piston 31 is formed with a center hole 311. Furthermore, the upper end of the piston 31 is screwed on and engaged with the second outer screw thread 24 of the second end of the barrel 2. A plurality of through holes 312 running to the annulus groove 310 is formed on the bottom of the piston 31. Furthermore, a piston ring 32 is positioned to engage with the annulus groove 310.

In addition, the check valve includes a check valve seat 33 and a check valve disc 34. The check valve seat 33 has a stepped tubular body and a central hole 331. The check valve disc 34 has a soft body, and is disposed inside the larger inner diameter of the check valve seat 33; and thus the check valve disc 34 can move in between the center hole 311 of the piston 31 and the central hole 331 of the check valve seat 33. After the second end of the barrel 2 is fitted with a second buffer ring 35, the end of the check valve seat 33 which has the smaller outer diameter is positioned inside the inner diameter of the second end of the barrel 2. Then, after the check valve disc 34 is disposed inside the end of the check valve seat 33 having the larger outer diameter, the check valve seat 33 is positioned into the upper end of the piston 31; and then the upper end of the piston 31 is screwed on and engaged with the second outer screw thread 24 of the barrel 2.

Furthermore, the head 4 has a gas passage running through its bottom surface and side surface, on the two ends of which, a first screw hole 41 and a second screw hole 42 are formed, respectively. After the first end of the barrel 2 is fitted with a first buffer ring 22, the first outer screw thread 23 is engaged with the first screw hole 41 of the head 4, and thus the gas passage of the head 4 is communicated with the air passage 21 of the barrel 2.

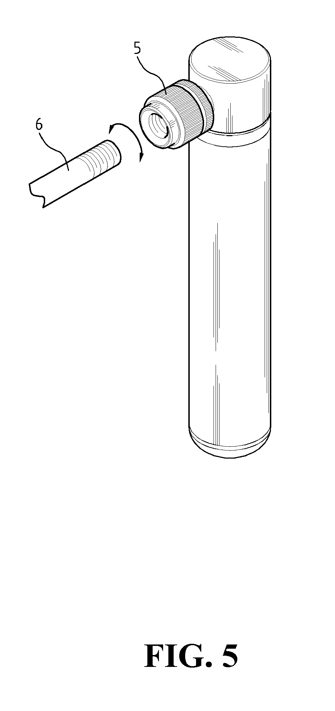

In the embodiment, the dispensing head 5 is a screw-on swivel head, in which one end is engaged with the second screw hole 42 of the head 4, and the other end of the dispensing head 5 can be engaged with the inflating valve 6 of the inflated objects (with reference to FIG. 5).

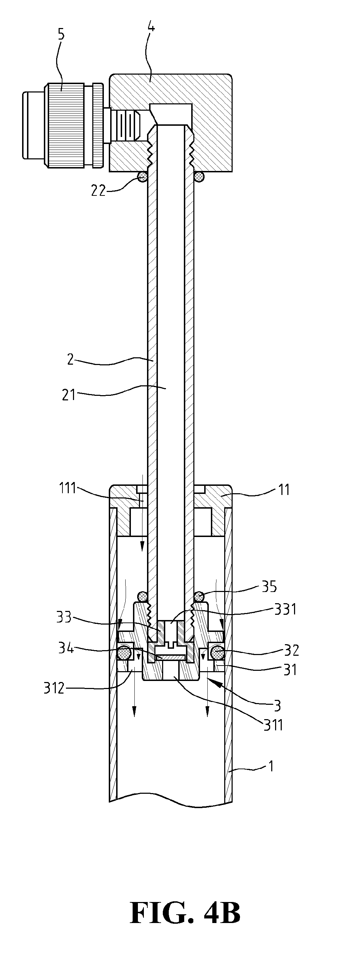

FIG. 4A and FIG. 4B are illustrative of the respective movements and air flow during an inflating process or stroke using the portable air pump according to the present invention. As the user is holding the tubular body 1 and moving the tubular body 1 at the direction towards the head 4 along the axis direction of the barrel 2, the check valve disc 34 is pressed by the air pressure and is moved towards the upper end of the check valve seat 33. But because of the side holes formed on the lower portion of the central hole 331 of the check valve seat 33, the central hole 331 cannot be totally closed by the check valve disc 34; therefore, the air in the bottom end of the tubular body 1 can flow into the air passage 21 of the barrel 2 through the center hole 311 of the piston 31 and the central hole 331 of the check valve seat 33, and then to flow out from the head 4 and the dispensing head 5 so as to inflate the objects (with reference to FIG. 4). As the tubular body 1 is moved along the axis direction of the barrel 2, and in the direction away from the head 4, the air can be flown into the tubular body 1 through the air inlet holes 111 of the upper cover 11, and then flown to the bottom of the tubular body 1 through the through holes 312 of the piston 31 (with reference to FIG. 4B) so as to be ready for the next inflating stroke.

During the inflating stroke, the upper cover 11 may collide with the head 4 to produce a noise or damage the air pump. So in the embodiment of the present invention, the first buffer ring 22 is used as a buffering member between the head 4 and the upper cover 11 for avoiding the above problem. Also, in the back stroke, the upper cover 11 may also collide with the piston 31 to produce a noise or damage the air pump, so the second buffer ring 35 is used as the buffering member between the piston 31 and the upper cover 11 for avoiding the problem. Referring to FIGs. 4A-4B, the first buffer ring 22 is disposed at the connecting location between the outer diameter of the first end of the barrel 2 and the head 4; the second buffer ring 35 is disposed at the connecting location between the outer diameter of the second end of the barrel 2 and the piston 31.

Although the present invention has been described with reference to the preferred embodiment thereof, it is apparent to those skilled in the art that a variety of modifications and changes may be made without departing from the scope of the present invention which is intended to be defined by the appended claims.

## Claims

1. A portable air pump, comprising:
a tubular body, disposed with an upper cover at a first end, comprising a plurality of air inlet holes, and a bottom cover at a second end, for sealing the second end, respectively;
a barrel, comprising an air passage running through the first end to the second end of the barrel along the axis direction;
a piston mechanism, comprising a piston and a check valve; the piston is disposed on the second end of the barrel and the outer diameter of the piston is engaged with a piston ring; the check-valve is disposed in between the second end of the barrel and the piston; the piston and the second end of the barrel are disposed inside the tubular body; the piston comprising a center hole and at least one through hole formed on the bottom surface;
a head, comprising a gas passage running through the bottom surface and the side surface, and disposed at the first end of the barrel, making the gas passage of the head communicating with the air passage of the barrel; and
a dispensing head, disposed at the head and is communicated with the gas passage of the head, wherein as the tubular body is moved in relation to the barrel at a direction away from the head, the air is to flow into the tubular body through the air inlet holes of the upper cover, and then flown to the bottom of the tubular body through the through hole of the piston; and as the tubular body is moved in relation to the barrel at a direction towards the head, the air in the bottom of the tubular body is flown into the air passage of the barrel through the center hole of the piston and the central hole of the check valve, and then flown out from the head and the dispensing head.

2. The portable air pump as claimed in Claim 1, wherein the check valve comprising a check valve seat comprising a stepped tubular body, one end of the check valve seat is inserted into the air passage of the second end of the barrel, and the other end of the check valve seat is inserted into the piston; and a check valve disc is disposed inside the check valve seat, and the check valve disc is able to move in between the center hole of the piston and the central hole of the check valve seat.

3. The portable air pump as claimed in Claim 1, wherein a first buffer ring is disposed at the connecting location between the outer diameter of the first end of the barrel and the head; a second buffer ring is disposed at the connecting location between the outer diameter of the second end of the barrel and the piston.
